# EUROPÄISCHE PATENTANMELDUNG

(11) **EP 2 639 499 A2**
(43) Veröffentlichungstag der Anmeldung: **18.09.2013**
(21) Anmeldenummer: 13158608.3
(22) Anmeldetag: 11.03.2013
(51) Int. Cl.: F21V 8/00, F21Y 101/02, F21Y 113/00

(54) **LED-Modul mit Lichtleitplatte**

(30) Priorität: 12.03.2012 DE 102012203791
(71) Anmelder: Zumtobel Lighting GmbH, 6850 Dornbirn (AT)
(72) Erfinder: Vamberszky, Klaus, 6900 Bregenz (AT)
(74) Vertreter: Thun, Clemens

(57) **Zusammenfassung**

Die Erfindung betrifft ein LED-Modul mit einer ersten Lichtquelle (2) zur Abstrahlung eines ersten Lichts (*L1*) in eine Hauptabstrahlrichtung (R) sowie mit einem Lichtleitelement (3), das eine, normal zu der Hauptabstrahlrichtung (R) orientierte Lichteintrittsfläche (31) aufweist, eine normal zu der Hauptabstrahlrichtung (R) orientierte Lichtaustrittsfläche (32) und eine Seitenfläche (33). Dabei ist das LED-Modul derart gestaltet, dass das erste Licht (L1) über die Lichteintrittsfläche (31) in das Lichtleitelement (3) einstrahlt und im Weiteren das Lichtleitelement (3) über die Lichtaustrittsfläche (32) wieder verlässt. Außerdem weist das LED-Modul eine zweite Lichtquelle (4) zur Abstrahlung eines zweiten Lichts (L2) auf, wobei die zweite Lichtquelle (4) derart angeordnet ist, dass das von ihr abgestrahlte zweite Licht (L2) über die Seitenfläche (33) in das Lichtleitelement (3) einstrahlt; das Lichtleitelement (3) weist eine Auskoppelstruktur (35) zur Auskopplung des zweiten Lichts (L2) über die Lichtaustrittsfläche (32) auf. Durch die Auskoppelstruktur (35) lässt sich das zweite Licht (L2) quasi beliebig gleichmäßig dem ersten Licht (L1) zumischen. Daher ist durch das LED-Modul eine besonders homogene Lichtabgabe ermöglicht.

## Beschreibung

Die Erfindung betrifft ein LED-Modul mit einer ersten Lichtquelle zur Abstrahlung eines ersten Lichts in eine Hauptabstrahlrichtung.

Aus dem Stand der Technik ist ein derartiges LED-Modul bekannt, bei dem auf einer Platine mehrere erste LEDs angeordnet sind, die ein weißes Licht abstrahlen, sowie mehrere zweite LEDs, die ein rötliches Licht abstrahlen. Dabei sind die ersten LEDs und die zweiten LEDs in sich gegenseitig überlappenden Bereichen auf der Platine angeordnet, so dass insgesamt ein weißes Licht mit einem rötlichen Anteil erzeugt wird.

Wird ein derartiges LED-Modul in einer Leuchte eingesetzt, kommt es allerdings in der Regel dazu, dass bei Betrachtung der Leuchte eine nicht homogene Lichtfläche zu sehen ist, also Bereiche mit mehr rötlichem Licht und andere Bereiche mit mehr weißem Licht.

Der Erfindung liegt die Aufgabe zugrunde, ein verbessertes LED-Modul anzugeben, insbesondere ein LED-Modul, mit dem eine besonders homogene Lichtabgabe erzielbar ist.

Diese Aufgabe wird gemäß der Erfindung mit dem in dem unabhängigen Anspruch genannten Gegenstand gelöst. Besondere Ausführungsformen der Erfindung sind in den abhängigen Ansprüchen angegeben.

Gemäß der Erfindung ist ein LED-Modul mit einer ersten Lichtquelle zur Abstrahlung eines ersten Lichts in eine Hauptabstrahlrichtung vorgesehen. Weiterhin weist das LED-Modul ein Lichtleitelement auf, das eine, normal zu der Hauptabstrahlrichtung orientierte Lichteintrittsfläche aufweist, eine normal zu der Hauptabstrahlrichtung orientierte Lichtaustrittsfläche und eine, die Lichteintrittsfläche und die Lichtaustrittsfläche verbindende Seitenfläche. Dabei ist das LED-Modul derart gestaltet, dass das erste Licht über die Lichteintrittsfläche in das Lichtleitelement einstrahlt und im Weiteren das Lichtleitelement über die Lichtaustrittsfläche wieder verlässt. Außerdem weist das LED-Modul eine zweite Lichtquelle zur Abstrahlung eines zweiten Lichts auf, wobei die zweite Lichtquelle derart angeordnet ist, dass das von ihr abgestrahlte zweite Licht über die Seitenfläche in das Lichtleitelement eingekoppelt wird bzw. einstrahlt und wobei das Lichtleitelement eine Auskoppelstruktur zur Auskopplung des zweiten Lichts aus dem Lichtleitelement über die Lichtaustrittsfläche aufweist.

Durch die Auskoppelstruktur des Lichtleitelements lässt sich das zweite Licht quasi beliebig gleichmäßig dem ersten Licht zumischen. Daher ist durch das LED-Modul eine besonders homogene Lichtabgabe ermöglicht.

Die erste Lichtquelle weist vorzugsweise blaues Licht abstrahlende LEDs bzw. LED-Chips auf, die alle derart angeordnet sind, dass sie eine, normal zu der Hauptabstrahlrichtung orientierte Ebene der ersten Lichtquelle durchsetzen. Hierdurch ist eine besonders homogene Lichtabgabe bei kompakter Gestaltung des LED-Moduls ermöglicht.

Vorzugsweise weist die erste Lichtquelle weiterhin ein Farbkonversionsmittel auf, das insbesondere ein Phosphormaterial aufweist, zur Umwandlung eines Teils des blauen Lichts in ein Licht einer anderen Farbe. Hierdurch lässt sich insbesondere ein Licht erzeugen, das weißlich erscheint oder grünlich-weiß. Vorzugsweise ist das erste Licht ein grünlich-weißes Licht.

Die erste Lichtquelle kann vorzugsweise durch eine Multichip-LED gebildet sein, die vorteilhaft durch ein dam and fill Verfahren gefertigt ist. Hierdurch ist eine besonders kompakte Bauweise bei besonders homogener Lichtabgabe der ersten Lichtquelle ermöglicht.

Herstellungstechnisch vorteilhaft ist die zweite Lichtquelle derart angeordnet, dass sie eine Ebene der zweiten Lichtquelle durchsetzt, die normal zu der Hauptabstrahlrichtung orientiert zwischen der Lichteintrittsfläche und der Lichtaustrittsfläche verläuft. Hierdurch ist ermöglicht, dass das LED-Modul mit einer besonders geringen Erstreckung in Hauptabstrahlrichtung gestaltet werden kann.

Beispielsweise kann die zweite Lichtquelle wenigstens eine LED zur Abstrahlung eines roten Lichts umfassen. Hierdurch ist eine Abgabe eines weißen Lichts über die Lichtaustrittsfläche ermöglicht, das je nach Intensitätsverteilung des ersten und des zweiten Lichts eine bestimmte Farbtemperatur aufweist bzw. das durch einen bestimmten Farbort charakterisiert ist.

Alternativ oder vorzugsweise zusätzlich kann die zweite Lichtquelle wenigstens eine LED zur Abstrahlung eines blauen Lichts umfassen. Hierdurch ist eine erweiterte Einstellbarkeit des Lichts ermöglicht, das über die Lichtabstrahlfläche das LED-Modul verlässt. Die zweite Lichtquelle kann außerdem wenigstens eine LED zur Abstrahlung eines grünen Lichts umfassen.

Die Auskoppelstruktur ist herstellungstechnisch vorteilhaft an der Lichteintrittsfläche und/oder an der Lichtaustrittsfläche des Lichtleitelements ausgebildet.

Vorzugsweise weist das LED-Modul außerdem eine Steuereinheit zur unabhängigen Regulierung der Intensitäten des ersten Lichts und des zweiten Lichts auf. Auf diese Weise lässt sich ein Farbort des Lichts, das insgesamt über die Lichtaustrittsfläche abgegeben wird, einstellen.

Vorzugsweise ist dabei die Steuereinheit weiterhin dazu ausgelegt, die LEDs der zweiten Lichtquelle zur Abstrahlung eines roten Lichts und die LEDs der zweiten Lichtquelle zur Abstrahlung eines blauen Lichts unabhängig voneinander zu regeln. Hierdurch ist eine besonders gute Einstellbarkeit des von dem LED-Modul insgesamt über die Lichtabstrahlfläche abgegebenen Lichts ermöglicht.

Das Lichtleitelement kann herstellungstechnisch vorteilhaft - entgegen der Hauptabstrahlrichtung gesehen - eine rechteckförmige, insbesondere eine quadratische oder eine längliche Form oder eine runde, insbesondere eine kreisrunde Form aufweisen.

Die Erfindung wird im Folgenden anhand von Ausführungsbeispielen und mit Bezug auf die Zeichnungen näher erläutert. Es zeigen:
- Fig. 1a: eine Skizze zu einem ersten Ausführungsbeispiel eines erfindungsgemäßen LED-Moduls,
- Fig. 1b: eine Skizze zu einer Variante hierzu,
- Fig. 2: eine Skizze zu einem zweiten Ausführungsbeispiel eines erfindungsgemäßen LED-Moduls und
- Fig. 3: drei Skizzen zu möglichen Formen eines erfindungsgemäßen LED-Moduls.

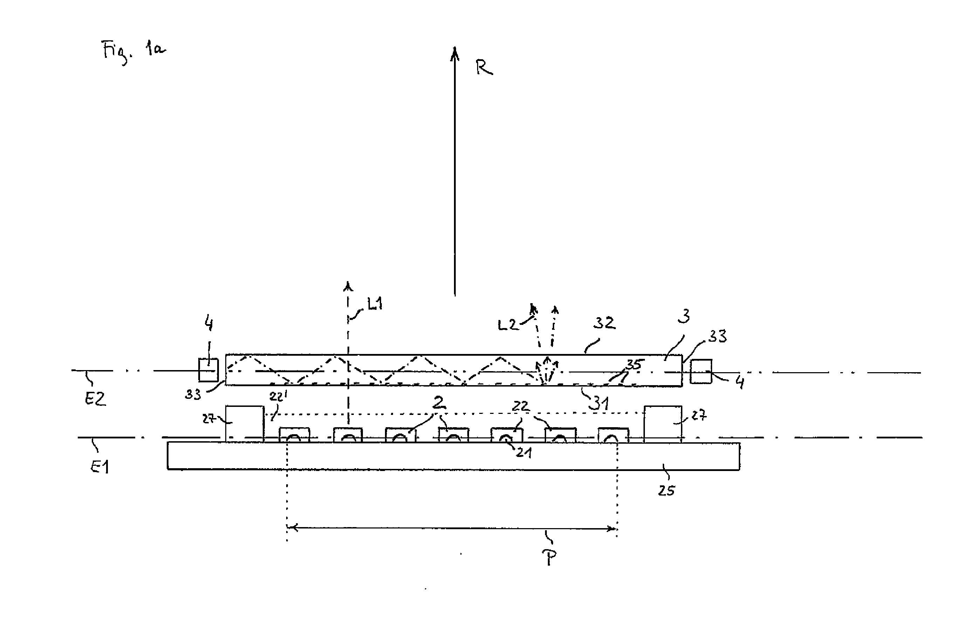

In Fig. 1a ist ein erstes Ausführungsbeispiel eines erfindungsgemäßen LED-Moduls skizziert. Das LED-Modul weist eine erste Lichtquelle 2 zur Abstrahlung eines ersten Lichts *L1* in eine Hauptabstrahlrichtung *R* auf.

Die erste Lichtquelle 2 kann insbesondere ein blaues Licht abstrahlende LEDs 21 - im Folgenden kurz "blaue LEDs" 21 - aufweisen. Weiterhin kann die erste Lichtquelle 2 ein Farbkonversionsmittel 22 zur Umwandlung eines Teils des blauen Lichts in ein Licht einer anderen Farbe aufweisen. Das Farbkonversionsmittel 22 kann - wie in Fig. 1a angedeutet - mehrteilig ausgebildet sein, so dass über jeder der blauen LEDs 21 ein separater Anteil des Farbkonversionsmittels 22 angeordnet ist. Alternativ kann - wie in Fig. 1a gestrichelt angedeutet und mit dem Bezugszeichen 22' versehen - das Farbkonversionsmittel beispielsweise auch durch eine einteilige Schicht gebildet sein, die die blauen LEDs 21 überdeckt. Hierdurch ist eine besonders homogene Lichtabgabe der ersten Lichtquelle 2 ermöglicht.

Das Farbkonversionsmittel 22 kann Phosphor enthalten oder aus einem Phosphor bestehen und derart gestaltet sein, dass das Licht einer anderen Farbe ein gelbliches oder grünliches Licht ist, insbesondere derart, dass insgesamt das erstes Licht ein weißliches bzw. weißes, insbesondere ein grünlich-weißes Licht ist. Vorzugsweise weist das erste Licht eine Farbe auf, deren Farbort im CIE Farbdiagramm (CIE: Commission Internationale de l'Eclairage) aus dem Jahre 1931 (CIE-Normfarbtafel) "oberhalb" der Schwarzkörper-Kurve ("Black-Body Kurve") liegt. Das erste Licht *L1* weist vorzugsweise eine Farbe auf, die im Bereich der maximalen Empfindlichkeit des menschlichen Auges liegt.

Herstellungstechnisch vorteilhaft besteht die erste Lichtquelle 2 lediglich aus den blauen LEDs 21 und dem Farbkonversionsmittel 22.

In Fig. 1a ist das erste Licht *L1* durch einen gestrichelten Pfeil angedeutet. Der Übersichtlichkeit halber ist der Pfeil lediglich bei einer der blauen LEDs 21 gezeichnet. Natürlich strahlen alle blauen LEDs 21 Licht ab. Alle blauen LEDs 21 der ersten Lichtquelle 2 sind vorzugsweise baugleich. Weiterhin vorzugsweise sind die blauen LEDs 21 der ersten Lichtquelle 2 derart angeordnet, dass sie eine normal zu der Hauptabstrahlrichtung *R* orientierte Ebene *E1* der ersten Lichtquelle durchsetzen.

Die erste Lichtquelle 2 kann auch durch wenigstens eine Multichip-LED gebildet sein, die beispielsweise im so genannten "dam and fill"-Verfahren hergestellt ist. In der Skizze der Fig. 1a ist ein entsprechender Damm 27 und das entsprechend eingefüllte Farbkonversionsmittel 22' angedeutet.

Die blauen LEDs 21 sind vorteilhaft auf einer Platine 25 angeordnet, die ebenfalls normal zu der Hauptabstrahlrichtung *R* orientiert angeordnet ist.

Weiterhin weist das LED-Modul ein Lichtleitelement 3 auf, das eine Lichteintrittsfläche 31, eine dazu parallele Lichtaustrittsfläche 32 sowie eine, die Lichteintrittsfläche 31 und die Lichtaustrittsfläche 32 verbindende Seitenfläche 33 aufweist. Die Anordnung ist dabei derart, dass sowohl die Lichteintrittsfläche 31, als auch die Lichtaustrittsfläche 32 normal zu der Hauptabstrahlrichtung *R* orientiert sind.

Das Lichtleitelement 3 kann mit (in den Figuren nicht gezeigten) Haltemitteln lagefest mit der Platine 25 verbunden bzw. an dieser gehaltert sein.

Das Lichtleitelement 3 ist vorzugsweise plattenförmig, wobei die Lichteintrittsfläche 31 und die Lichtaustrittsfläche 32 durch die beiden, durch die Plattenform gegebenen großen parallelen Seitenflächen gegeben sind und die Seitenfläche 33 durch den, die Ränder der großen Seitenflächen umlaufend verbindenden Kantenbereich.

Das LED-Modul ist derart gestaltet, dass das erste Licht *L1* über die Lichteintrittsfläche 31 in das Lichtleitelement 3 einstrahlt und im Weiteren das Lichtleitelement 3 über die Lichtaustrittsfläche 32 wieder verlässt. Vorzugsweise ist zwischen der der ersten Lichtquelle 2 und dem Lichtleitelement 3 kein weiteres Bauteil des LED-Moduls vorgesehen; hierdurch ist eine besonders effiziente Lichtabgabe ermöglicht.

Die Gestaltung ist dabei insbesondere derart, dass das erste Licht *L1* möglichst homogen aus der Lichtaustrittsfläche 32 des Lichtleitelements 3 ausstrahlt. Hierzu können beispielsweise die blauen LEDs 21 mit vergleichsweise geringen gegenseitigen Abständen auf der Platine 25 angeordnet sein. Beispielsweise kann die Anordnung derart sein, dass die gegenseitigen Abstände der blauen LEDs 21 auf der Platine 25 kleiner sind als das Fünfzigfache, vorzugsweise als das Zwanzigfache des Durchmessers einer der blauen LEDs 21.

Die Gestaltung ist weiterhin vorteilhaft derart, dass das Lichtleitelement 3, insbesondere mit seiner Lichteintrittsfläche 31 und mit seiner Lichtaustrittsfläche 32 denjenigen Bereich vollständig überdeckt, der durch die Projektion *P* der blauen LEDs 21 in Richtung der Hauptabstrahlrichtung *R* gegeben ist. Die Anordnung ist weiterhin vorteilhaft derart, dass die Seitenfläche 33 vorzugsweise vollständig außerhalb der genannten Projektion *P* verläuft.

Weiterhin weist das LED-Modul eine zweite Lichtquelle 4 zur Abstrahlung eines zweiten Lichts *L2* auf. Die zweite Lichtquelle 4 ist derart angeordnet, dass das von ihr abgestrahlte zweite Licht *L2* über die Seitenfläche 33 in das Lichtleitelement 3 einstrahlt. Das Lichtleitelement 3 weist weiterhin eine Auskoppelstruktur 35 zur Auskopplung des zweiten Lichts *L2* aus dem Lichtleitelement 3 über die Lichtaustrittsfläche 32 auf.

Das zweite Licht ist in Fig. 1a durch strichpunktierte Pfeile angedeutet. Wiederum ist aus Gründen der Übersichtlichkeit die Skizze insoweit nicht vollständig. Vielmehr ist die Gestaltung des LED-Moduls insbesondere so, dass auch das zweite Licht *L2* möglichst homogen aus der Lichtaustrittsfläche 32 des Lichtleitelements 3 ausstrahlt. Auf diese Weise lässt sich eine insgesamt besonders homogene Lichtabgabe mit dem LED-Modul erzielen. Insbesondere lässt sich auf diese Weise zuverlässig vermeiden, dass sich Bereiche auf der Lichtaustrittsfläche 32 bilden, die in wahrnehmbarer Weise unterschiedlich gefärbt sind.

Das Lichtleitelement 3 ist insbesondere so gestaltet, dass es das zweite Licht *L2* durch Weiterleitung quasi gleichmäßig über das Lichtleitelement 3 verteilt, so dass hierdurch eine gute Voraussetzung für eine besonders homogene Abgabe des zweiten Lichts *L2* über die Lichtaustrittsfläche 32 gebildet ist. Die Auskoppelstruktur 35 ist hierfür vorzugsweise derart gestaltet, dass sie den Bereich der durch die Projektion P der blauen LEDs 21 der ersten Lichtquelle 2 in Richtung der Hauptabstrahlrichtung R gegeben ist, gleichförmig bzw. gleichmäßig überdeckt. Vorzugsweise ist die Auskoppelstruktur 35 derart ausgebildet, dass sie aus Strukturelementen besteht, die einen Durchmesser aufweisen, der kleiner ist als der maximale Abstand zwischen zwei der LEDs der ersten Lichtquelle 2.

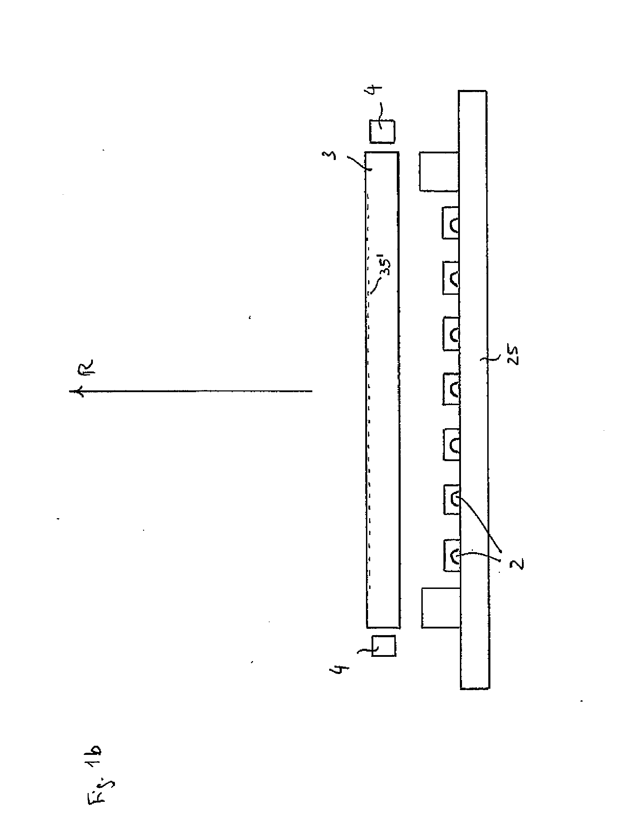

Die Auskoppelstruktur 35 kann - wie in Fig. 1a skizziert - an der Lichteintrittsfläche 31 ausgebildet sein. Die Auskoppelstruktur kann aber auch - wie in Fig. 1b skizziert und mit dem Bezugszeichen 35' bezeichnet - an der Lichtaustrittsfläche 32 ausgebildet sein. Die Auskoppelstruktur kann auch an beiden der genannten Flächen 31, 32 ausgebildet sein.

Die zweite Lichtquelle 4 kann durch wenigstens eine LED gebildet sein, beispielsweise durch wenigstens eine, ein rotes Licht abstrahlende LED - im Folgenden auch kurz "rote LED" der zweiten Lichtquelle 4 - gebildet sein.

Die zweite Lichtquelle 4 bzw. die LEDs der zweiten Lichtquelle 4 sind vorzugsweise derart angeordnet, dass sie eine Ebene *E2* der zweiten Lichtquelle durchsetzen, die normal zu der Hauptabstrahlrichtung *R* orientiert ist und zwischen der Lichteintrittsfläche 31 und der Lichtaustrittsfläche 32 verläuft. Hierdurch ist eine besonders effektive Einkopplung des zweiten Lichts über die Seitenfläche 33 in das Lichtleitelement 3 ermöglicht. Die LEDs der zweiten Lichtquelle 4 können beispielsweise über (in den Figuren nicht gezeigte) Haltemittel mit der Platine 25 und/oder mit dem Lichtleitelement 3 verbunden sein.

Wenn die zweite Lichtquelle 4 durch wenigstens eine rote LED gebildet ist, lässt sich erzielen, dass insgesamt über die Lichtaustrittsfläche 32 ein Licht abgegeben wird, das sich aus dem ersten, grünlich-weißen Licht *L1* und dem zweiten, roten Licht *L2* zusammensetzt. Durch entsprechende Wahl der Intensitäten des ersten Lichts *L1* und des zweiten Lichts *L2* lässt sich auf diese Weise ein weißes Licht einer bestimmten, gewünschten Farbtemperatur bzw. mit einem bestimmten Farbort einstellen. Vorzugsweise kann das LED-Modul hierzu weiterhin eine (in den Figuren nicht gezeigte) Steuereinheit aufweisen, die dazu ausgebildet ist, die Intensität des ersten Lichts *L1* und die Intensität des zweiten Lichts *L2* insbesondere unabhängig voneinander einzustellen bzw. zu regeln.

Aufgrund der beschriebenen Ausbildung sind bei dem erfindungsgemäßen LED-Modul die blauen LEDs 21 der ersten Lichtquelle 2 und die roten LEDs der zweiten Lichtquelle 4 in voneinander vollständig getrennten Bereichen angeordnet. Dies ermöglicht - im Vergleich zum eingangs erwähnten Stand der Technik - eine erleichterte Herstellung und auch erleichterte Ansteuerung. Die Verschaltung der betreffenden LEDs lässt sich aufgrund der räumlichen Trennung leichter herstellen. Dies ist insbesondere von Vorteil, weil unterschiedlich farbige LEDs im Allgemeinen mit unterschiedlichen Versorgungsströmen betrieben werden müssen.

Das Lichtleitelement 3 kann zudem für eine weitere Funktionalität verwendet werden, beispielsweise zur Abzweigung von Licht für einen Sensor, der zur Erfassung einer Leuchtdichte und/oder eines Farborts des Lichts ausgebildet ist.

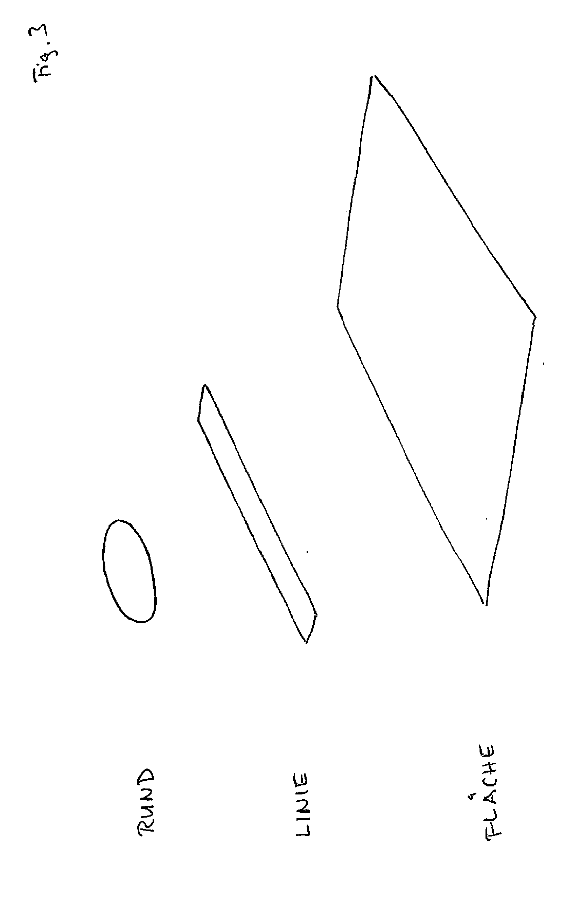

Die Form des Lichtleitelements 3 - entgegen der Hauptabstrahlrichtung R betrachtet - kann quasi beliebig gewählt sein. Beispielsweise kann - wie sehr schematisch in Fig. 3 perspektivisch skizziert - eine runde, insbesondere eine kreisrunde Form vorgesehen sein. Es kann aber auch eine insgesamt längliche Form, sozusagen eine "Linie" bzw. "Linienform" vorgesehen sein oder aber eine "flächige" Form, beispielsweise eine Rechteckform bzw. ein Quadrat.

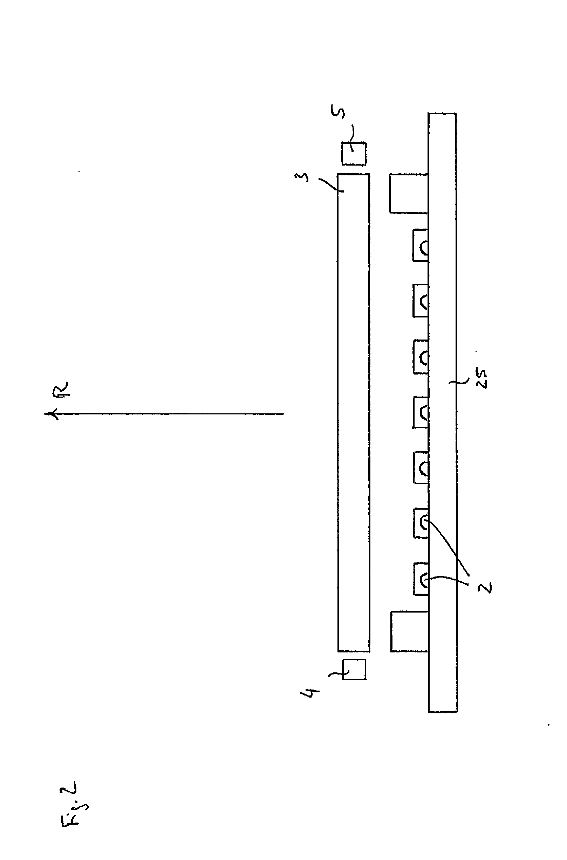

In Fig. 2 ist eine Skizze zu einem weiteren Ausführungsbeispiel skizziert. Im Folgenden werden lediglich Unterschiede zum oben beschriebenen ersten Ausführungsbeispiel beschrieben. Die Bezugszeichen sind analog gebraucht.

Das LED-Modul gemäß dem zweiten Ausführungsbeispiel unterscheidet sich von dem oben beschrieben darin, dass die zweite Lichtquelle LEDs 4 umfasst, die ein rotes Licht ausstrahlen und LEDs 5, die ein blaues Licht ausstrahlen. Vorteilhaft sind dabei die blauen LEDs 5 der zweiten Lichtquelle getrennt von den roten LEDs 4 der zweiten Lichtquelle angeordnet, insbesondere mit Bezug auf das Lichtleitelement 3 an gegenüberliegenden Seiten. Somit sind die LEDs entsprechend den Farben getrennt, so dass wiederum eine erleichterte Herstellung und Schaltung ermöglicht ist.

In diesem Fall hat das zweite Licht *L2* dementsprechend im Allgemeinen eine rote und eine blaue Komponente. Hierdurch lässt sich in größerem Ausmaß die Farbe des Lichts das insgesamt über die Lichtabstrahlfläche 32 abgegeben wird, verändern. Die Steuereinheit ist in diesem Fall vorteilhaft dazu ausgelegt, die roten LEDs 4 der zweiten Lichtquelle und die blauen LEDs 5 der zweiten Lichtquelle unabhängig voneinander in ihren Intensitäten zu regeln.

Die Ausgestaltung der zweiten Lichtquelle 4, 5 in Form von roten und blauen LEDs eignet sich besonders für den Fall, in dem die erste Lichtquelle 2 durch Pi-LEDs gebildet ist.

In einer, in den Figuren nicht ausdrücklich gezeigten Variante kann die zweite Lichtquelle auch noch ein grünes Licht abstrahlende, bzw. "grüne" LEDs umfassen. Auf diese Weise lässt sich der Farbort des insgesamt über die Lichtaustrittsfläche 32 abgegebenen Lichts noch weitergehend modifizieren.

Ein erfindungsgemäßes LED-Modul kann herstellungstechnisch vorteilhaft mit einem vergleichsweise einfachen, plattformartigen Aufbau gestaltet werden. Die Platine 25 mit der ersten Lichtquelle 2 lässt sich mit unterschiedlich gestalteten zweiten Lichtquellen 4, 5 verbinden.

## Patentansprüche

1. LED-Modul, aufweisend
- eine erste Lichtquelle (2) zur Abstrahlung eines ersten Lichts (*L1*) in eine Hauptabstrahlrichtung (*R*),
**gekennzeichnet durch**
- ein Lichtleitelement (3) mit einer, normal zu der Hauptabstrahlrichtung (R) orientierten Lichteintrittsfläche (31), einer normal zu der Hauptabstrahlrichtung (R) orientierten Lichtaustrittsfläche (32) und einer, die Lichteintrittsfläche (31) und die Lichtaustrittsfläche (32) verbindende Seitenfläche (33),
wobei das LED-Modul derart gestaltet ist, dass das erste Licht (*L1*) über die Lichteintrittsfläche (31) in das Lichtleitelement (3) einstrahlt und im Weiteren das Lichtleitelement (3) über die Lichtaustrittsfläche (32) wieder verlässt, sowie
- eine zweite Lichtquelle (4, 5) zur Abstrahlung eines zweiten Lichts (*L2*), wobei die zweite Lichtquelle (4, 5) derart angeordnet ist, dass das von ihr abgestrahlte zweite Licht (*L2*) über die Seitenfläche (33) in das Lichtleitelement (3) einstrahlt und
wobei das Lichtleitelement (3) eine Auskoppelstruktur (35) zur Auskopplung des zweiten Lichts (*L2*) aus dem Lichtleitelement (3) über die Lichtaustrittsfläche (32) aufweist.

2. LED-Modul nach Anspruch 1,
bei dem die erste Lichtquelle (2) ein blaues Licht abstrahlende LEDs (21) aufweist, die alle derart angeordnet sind, dass sie eine, normal zu der Hauptabstrahlrichtung (*R*) orientierte Ebene (*E1*) der ersten Lichtquelle (2) durchsetzen.

3. LED-Modul nach Anspruch 2,
bei der die erste Lichtquelle (2) weiterhin ein Farbkonversionsmittel (22), insbesondere ein Phosphormaterial aufweisend, zur Umwandlung eines Teils des blauen Lichts in ein Licht einer anderen Farbe aufweist.

4. LED-Modul nach einem der vorhergehenden Ansprüche,
bei der das erste Licht ein grünlich-weißes Licht ist.

5. LED-Modul nach einem der vorhergehenden Ansprüche,
bei der die erste Lichtquelle (4) durch eine Multichip-LED gebildet ist, die insbesondere durch ein dam and fill Verfahren gefertigt ist.

6. LED-Modul nach einem der vorhergehenden Ansprüche,
bei der die zweite Lichtquelle (4, 5) derart angeordnet ist, dass sie eine Ebene (E2) der zweiten Lichtquelle (4, 5) durchsetzt, die normal zu der Hauptabstrahlrichtung (R) orientiert zwischen der Lichteintrittsfläche (31) und der Lichtaustrittsfläche (32) verläuft.

7. LED-Modul nach einem der vorhergehenden Ansprüche,
bei der die zweite Lichtquelle (4, 5) wenigstens eine LED (4) zur Abstrahlung eines roten Lichts umfasst.

8. LED-Modul nach einem der vorhergehenden Ansprüche,
bei der die zweite Lichtquelle (4, 5) wenigstens eine LED (5) zur Abstrahlung eines blauen Lichts umfasst.

9. LED-Modul nach einem der vorhergehenden Ansprüche,
bei der die zweite Lichtquelle (4, 5) wenigstens eine LED zur Abstrahlung eines grünen Lichts umfasst.

10. LED-Modul nach einem der vorhergehenden Ansprüche,
bei dem die Auskoppelstruktur (35) an der Lichteintrittsfläche (31) und/oder an der Lichtaustrittsfläche (32) des Lichtleitelements (3) ausgebildet ist.

11. LED-Modul nach einem der vorhergehenden Ansprüche,
weiterhin aufweisend eine Steuereinheit zur unabhängigen Regulierung der Intensitäten des ersten Lichts (L1) und des zweiten Lichts (L2).

12. LED-Modul mit den in den Ansprüchen 7, 8 und 11 genannten Merkmalen,
bei dem die Steuereinheit weiterhin dazu ausgelegt ist, die LEDs (4) der zweiten Lichtquelle zur Abstrahlung eines roten Lichts und die LEDs (5) der zweiten Lichtquelle zur Abstrahlung eines blauen Lichts unabhängig voneinander zu regeln.

13. LED-Modul nach einem der vorhergehenden Ansprüche,
bei dem das Lichtleitelement (3) entgegen der Hauptabstrahlrichtung (R) gesehen eine rechteckförmige, insbesondere eine quadratische oder eine längliche Form oder eine runde, insbesondere eine kreisrunde Form aufweist.
